# EUROPEAN PATENT APPLICATION

(11) **EP 2 046 007 A1**
(43) Date of publication of application: **08.04.2009**
(21) Application number: 08734089.9
(22) Date of filing: 16.04.2008
(51) Int. Cl.: H04M 3/523

(54) **METHOD, SYSTEM AND DEVICE FOR CALL SCHEDULING**

(30) Priority: 17.04.2007 CN 200710098161
(71) Applicant: Huawei Technologies Co., Ltd., Longgang District, Shenzhen Guangdong 518129 (CN)
(72) Inventor: MAO, Jiahua, Shenzhen Guangdong 518129 (CN); ZHANG, Pu, Shenzhen Guangdong 518129 (CN)
(74) Representative: Gulde Hengelhaupt Ziebig & Schneider
(86) International application number: PCT/CN2008/070731
(87) International publication number: WO 2008/125064

(57) **Abstract**

A method for call scheduling for multi-call simultaneous holding and flexible scheduling, includes following steps: dispatching a received call to a scheduling terminal; receiving call processing request returned from the scheduling terminal; based on the call processing request to process as follows: keeping the received call into the corresponding call holding queue of the scheduling terminal, or keeping the call being handled currently by the scheduling terminal into the corresponding call holding queue of the scheduling terminal, and handling the received call, or dispatching the received call to other scheduling terminals. A call scheduling system and a scheduling device are disclosed too.

## Description

This application claims priority of Chinese Patent Application No. 200710098161.9, entitled "Method, System and Device for Dispatching Calls" and filed on April 17, 2007, which is hereby incorporated by reference in its entirety.

### Field of the Invention

The present invention relates to the field of communication technologies, and in particular to a call dispatch method, system and device.

### Background of the Invention

Call dispatch systems have been increasingly applied in our life along with constant development of the society. There are call dispatch system which handle various police crises of crime, fire hazard, explosion, and emergencies of public first aid, water or electric utility repair, and call dispatch systems which handle general production activities of traffic dispatch, field exploration, etc.

An existing call dispatch system adopts an approach of setting a call queue in which priorities are preset for call terminals, calls to be dispatched are queued in the call queue, and the call dispatch system allocates the calls to a dispatcher in a temporal sequence by a descending order of the priorities.

The inventors have found that the dispatch approach adopted in the conventional technology lacks flexibility and features in complex control process.

### Summary of the Invention

An embodiment of the present invention provides a call dispatch method which can hold a plurality of calls concurrently for a flexible dispatch.

An embodiment of the present invention provides a call dispatch method, including:
allocating a received call to a dispatch terminal;
receiving a call processing request returned from the dispatch terminal; and
executing, in response to the call processing request, the processing of storing the received call in a call hold queue corresponding to the dispatch terminal, or of holding a call currently processed by the dispatch terminal in the call hold queue corresponding to the dispatch terminal and processing the received call, or of allocating the received call to another dispatch terminal.

An embodiment of the present invention provides a call dispatch system, including a call dispatch server connected with one or more dispatch terminals.

The call dispatch server is adapted to receive a call sent from a user, to allocate the call to the dispatch terminal, receive a call processing request sent from the dispatch terminal, and execute, in response to the call processing request, the processing of storing the received call in a call hold queue corresponding to the dispatch terminal, or of holding a call currently processed by the dispatch terminal in the call hold queue corresponding to the dispatch terminal and processing the received call, or of allocating the received call to another dispatch terminal; and

The dispatch terminal is adapted to send the call processing request to the call dispatch server in response to a call control instruction.

An embodiment of the present invention provides a call dispatch device including:
a module adapted to receive a call initiated from a user and allocate the call to a dispatch terminal;
a module adapted to receive a call processing request sent from the dispatch terminal; and
a module adapted to execute, in response to the call processing request, the processing of storing the received call in a call hold queue corresponding to the dispatch terminal, or of holding a call currently processed by the dispatch terminal in the call hold queue corresponding to the dispatch terminal and processing the received call, or of allocating the received call to another dispatch terminal.

An embodiment of the present invention provides another call processing device including:
a call control server, adapted to receive a call access message sent from a call reception device, initiate a call dispatch request to a call dispatch server, and control the call reception device to divert and hold a call in accordance with a dispatch result from the call dispatch server; and
a call dispatch server, adapted to receive the call dispatch request, allocate the call to a dispatch terminal, receive a dispatch instruction from the dispatch terminal, and store the call in a call hold queue corresponding to the dispatch terminal or extract the held call from the call hold queue.

An embodiment of the present invention further provides a dispatch terminal including:
a call transmission/reception module, adapted to initiate a call to a user or receive a call initiated from the user;
a processing selection module, adapted to provide a dispatcher with options of approaches of processing the call and obtain a selection result from the dispatcher, notify a call hold module upon obtaining a call hold selection from the dispatcher, and notify a call execution module upon obtaining an immediate processing selection from the dispatcher;
a call hold module, adapted to store the call in a corresponding call hold queue and hold the call;
a call execution module, adapted to put through the call to activate communication; and
a call selection module, adapted to select the held call from the corresponding call hold queue so that the call execution module processes the call.

The technical solutions according to the embodiments of the present invention allocate a received call to one or more dispatch terminals and then process the received call by interacting with the dispatch terminal in reception of the allocated call. For example, a call processing request returned from the dispatch terminal is received, and the call is further processed in response to the call processing request, for example, possibly by storing the call in a call hold queue corresponding to the dispatch terminal and then further processing the call or by reallocating the call to another dispatch terminal. Thus, the received call can be held and can be selected from the call hold queue and processed at any moment dependent upon a processing progress, a load among the dispatch terminals can be balanced to improve flexibility and initiative of dispatching the call, and the control process is easy to implement.

### Brief Description of the Drawings

Figure 1 is a schematic diagram illustrating a structure of a call dispatch system according to an embodiment of the present invention;

Figure 2 is a schematic diagram illustrating a structure of a call terminal according to an embodiment of the present invention;

Figure 3 is a flow chart of a call dispatch method according to an embodiment of the present invention;

Figure 4 is a flow chart of signaling interaction for a call access and holding according to an embodiment of the present invention;

Figure 5 is a flow chart of signaling interaction for holding a currently processed call according to an embodiment of the present invention; and

Figure 6 is a flow chart of signaling interaction for selecting a call from a call hold queue and processing the call according to an embodiment of the present invention.

### Detailed Description of the Embodiments

In the dispatch approach adopted in the conventional technology, a call priority is preset by a terminal but it can not be determined that a call sent from the terminal is an emergent call to be processed preferentially; a call is allocated automatically from a call queue and a dispatcher has no option, thus resulting in an inflexible dispatch; for example, if an emergent call arrives while the dispatcher is processing a normal call, then the dispatcher can process the emergent call only if he releases the normal call, that is, the system has to put through the current emergent call after disconnecting a path of the normal call, thus resulting in a complex control process.

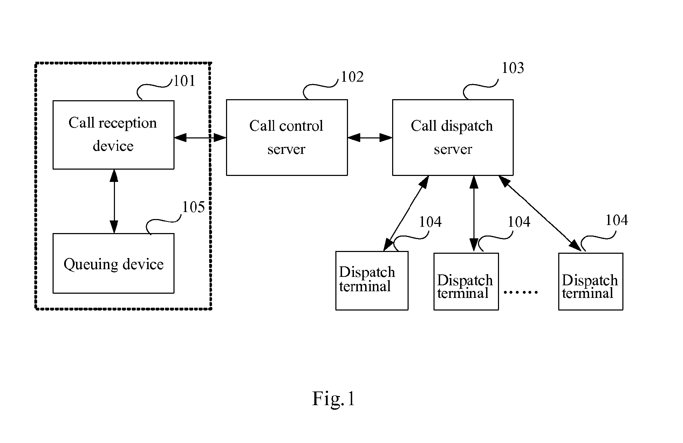

An embodiment of the present invention provides a call dispatch system as structured in the schematic diagram of Figure 1, which includes a call reception device 101, a call control server 102, a call dispatch server 103 and one or more dispatch terminals 104.

The call reception device 101 is adapted to receive a call initiated by a user or a dispatcher to connect the call, and interact with the call control server 102, for example, through a protocol of Computer Supported Telecommunication Applications (CSTA), including sending a call message of call access, put-through, holding, etc., to the call control server 102 and receiving a call control instruction from the call control server 102 to divert or hold the call.

The call control server 102 is adapted to interact with the call dispatch server 103 and control the call reception device 101 to divert or hold a call.

The call dispatch server 103 is adapted to allocate the call received by the call reception device 101 to the dispatch terminal 104, and store and update call hold queues corresponding to respective dispatch terminals 104.

The dispatch terminal 104 is adapted to receive a call control instruction from the user, interact with the call dispatch server 103, and store the allocated call in its corresponding call hold queue or select a call from the corresponding call hold queue and process the call.

A party held in a call hold status is in a wait status, and another party holding the current call can process another event. The call hold status can be enabled by a queuing device (e.g., a PARK device). The queuing device 105 receives and holds the call diverted by the call reception device 101, and there may be one or more queuing devices 105 which are integrated with the call reception device 101.

The call control server 102 and the call dispatch server 103 may be logic entities and may be integrated in a call processing device.

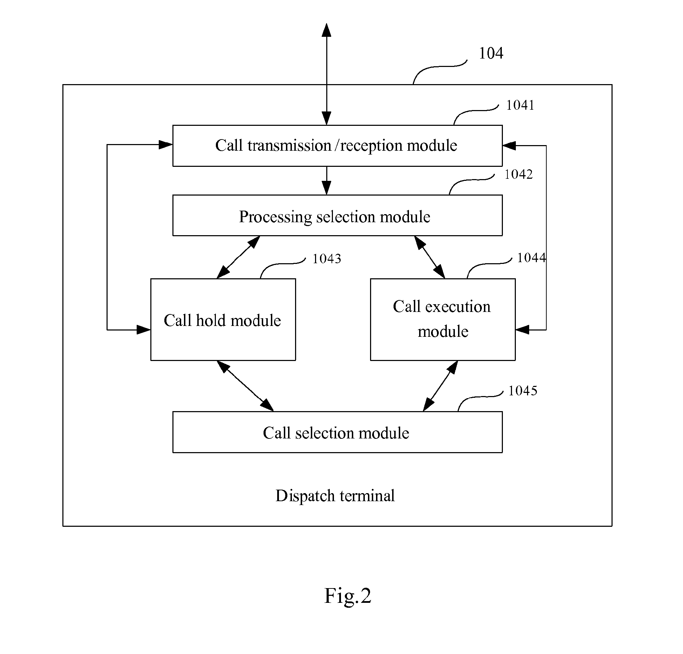

A specific structure of the dispatch terminal 104 as illustrated in Figure 2 includes:
a call transmission/reception module 1041, adapted to receive the call control instruction as well as user call information from the call dispatch server and send call control information to the call dispatch server;
a processing selection module 1042, adapted to provide a dispatcher with options of approaches of processing the call and obtain a selection result from the dispatcher, notify a call hold module 1043 upon obtaining a call hold selection from the dispatcher, and notify a call execution module 1044 upon obtaining an immediate processing selection from the dispatcher;
the call hold module 1043 is adapted to store the call received by the call transmission/reception module 1041, which is initiated from or directed to the user, in the call hold queue corresponding to the dispatch terminal and to hold the call; the call execution module 1044 is adapted to put through the call received by the call transmission/reception module 1041 and the call that is directed to the user, to activate communication; and
a call selection module 1045 is adapted to select the held call from the call hold queue corresponding to the dispatch terminal so that the call execution module 1044 processes the call.

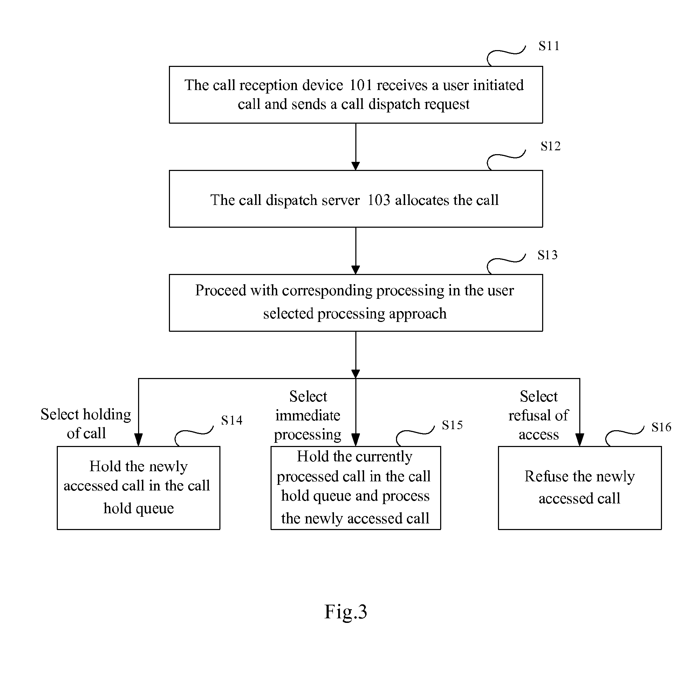

A specific example flow of dispatching a call by the call dispatch system upon reception thereof as illustrated in Figure 3 includes the following steps.

S11. The call reception device 101 receives a call initiated by a user and sends a call dispatch request to the call dispatch server 103 through the call control server 102.

S12. The call dispatch server 103 allocates the call.

Specifically, the call dispatch server queries about the number of calls stored currently in locally stored call hold queues corresponding to respective dispatch terminals, and allocates the call to one of the dispatch terminals 104 with the least number of stored calls.

S13. Upon reception of the allocated call, the dispatch terminal 104 prompts the dispatcher of the newly incoming call, requests the dispatcher for selection of a dispatch approach and executes a corresponding process in accordance with the dispatch approach selected by the dispatcher.

When the dispatcher selects holding of the call, the flow goes to the step S14; when the dispatcher selects immediate processing, the flow proceeds to the step S 15; when the dispatcher selects a refusal of processing, the flow proceeds to the step S16.

S14. The dispatch terminal 104 sends a call hold instruction to the call dispatch server 103, and the call dispatch server 103 stores the call in a call hold queue corresponding to the dispatch terminal 104 to which the call is allocated and instructs the call reception device 101 through the call control server 102 to divert the call to the queuing device 105 for being held and waiting for processing.

S 15. The dispatch terminal 104 determines whether another call is currently processed and processes directly the newly accessed call if it is idle; or if another call is currently processed, then the dispatch terminal firstly holds the currently processed call in its corresponding call hold queue and then processes the newly accessed call upon successful holding.

S16. The dispatch terminal 104 returns a call refusal message to the call dispatch server 103, and the call dispatch server 103 reallocates the call to another dispatch terminal.

The technical solutions according to the embodiments of the present invention allocate a received call to one or more dispatch terminals and then process the received call by interacting with the dispatch terminal in reception of the allocated call. For example, a call processing request returned from the dispatch terminal is received, and the call is further processed in response to the call processing request, for example, possibly by storing the call in a call hold queue corresponding to the dispatch terminal and then further processing the call or by reallocating the call to another dispatch terminal. Thus, the received call can be held and can be selected from the call hold queue and processed at any moment dependent upon a processing progress, a load among the dispatch terminals can be balanced to improve flexibility and initiative of dispatching the call, and the control process can be easy to implement. Furthermore, each dispatch terminal can process a plurality of calls (for example, more than eight calls are stored in the call hold queue corresponding to the dispatch terminal), and an emergent call can be processed preferentially. A dispatch terminal user can store a call in the call hold queue for a wait or select a call waiting for processing from the call hold queue and decide a priority of the call at his own will, thereby enabling better execution of a dispatch task.

The flow chart illustrated in Figure 3 depicts dispatch steps after call access, and a flow of signaling interaction between the components in the call dispatch system in a dispatch procedure will be described below with reference to the drawings.

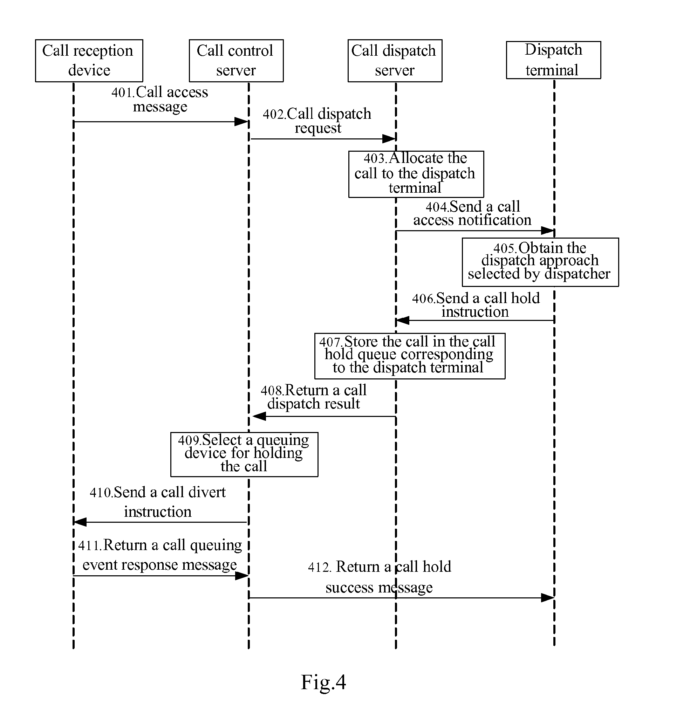

Referring to Figure 4, it is a flow chart of signaling interaction for a call access and holding according to an embodiment of the present invention.

401. The call reception device 101 receives a call initiated from a user and then sends a call access message to the call controls server 102.

402. The call control server 103 receives the call access message and then sends a call dispatch request to the call dispatch server 103.

403. The call dispatch server 103 allocates the call. Specifically, the server queries about the numbers of calls stored currently in locally stored call hold queues corresponding to respective dispatch terminals, and allocates the call to one of the dispatch terminals 104 with the least number of stored calls.

404. The call dispatch server 103 sends a call access notification to the dispatch terminal 104 to which the call is allocated.

405. The dispatch terminal 104 receives the call access notification, prompts the dispatcher about the incoming call, requests the dispatcher to select a dispatch approach and obtains the dispatch approach selected by the dispatcher.

When the dispatcher selects holding of the call, the following steps are executed.

406. The dispatch terminal 104 sends a call hold instruction to the call dispatch server 103.

407. The call dispatch server 103 stores the call in the call hold queue corresponding to the dispatch terminal 104.

408. The call dispatch server 103 returns to the call control server 102 a call dispatch result indicating that the dispatcher selects the dispatch approach of holding the call.

409. The call control server 102 selects a queuing device 105 for holding the call.

410. The call control server 102 sends a call divert (DIVERTCALL) instruction to the call reception device 101 to instruct the call reception device 101 to divert the call to the selected queuing device 105 for holding.

411. The call reception device 101 diverts the received call to the queuing device 105 for holding and then returns a call queuing event response message to the call control server 102.

412. The call control server 103 returns a call hold success response message to the dispatch terminal 104.

As depicted in the signaling flow illustrated in Figure 4, when the dispatch terminal receives a new call and the dispatcher selects the dispatch approach of first holding and then processing the call, the currently accessed call is stored in the call hold queue corresponding to the dispatch terminal and wait for later processing by the dispatcher. In this scenario, it is typical that the newly received call is not a particularly emergent call, or a higher-priority or more emergent call is being processed currently, and therefore the newly accessed call is firstly stored in the call hold queue and then the held call is selected from the call hold queue and processed at the end of processing the currently processed call.

There is another scenario in which the newly accessed call is a higher-priority call or an emergent call to be processed immediately, and in this scenario, selection of immediately processing the newly accessed call may be made. The dispatch terminal can process the newly accessed call directly if it is idle currently; but if the dispatch terminal is currently processing a call, it can hold the currently processed call in the corresponding call hold queue and then process the newly accessed emergent call upon successful holding.

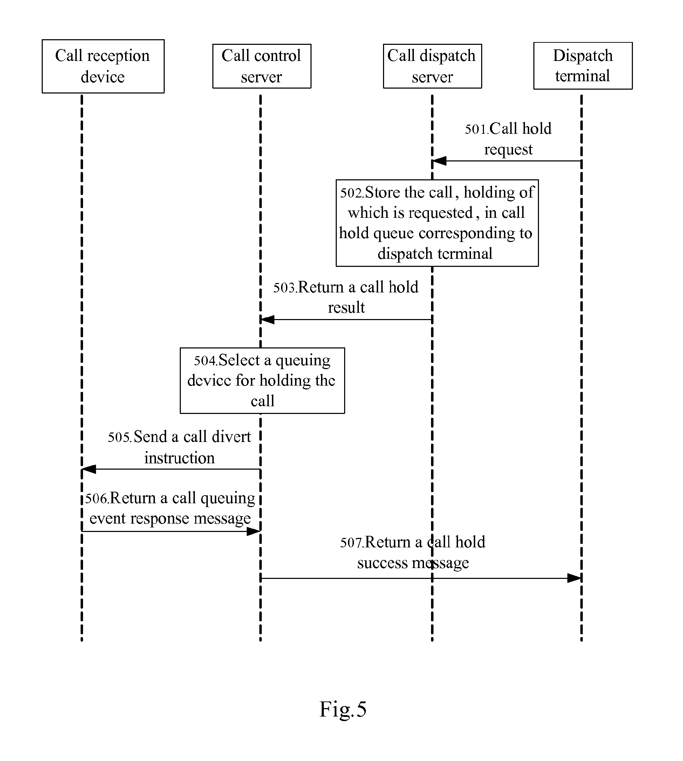

As illustrated in Figure 5, it is an example flow chart of signaling interaction for holding a currently processed call by a dispatch terminal in a corresponding call hold queue including the following steps.

501. The dispatch terminal 104 sends to the call dispatch server 103 a call hold request carrying a corresponding identifier of the call that is requested to be held (a call ID), and in this embodiment, the call is a call currently processed by the dispatch terminal, and the corresponding identifier is an identifier corresponding to the call being processed by the dispatch terminal.

502. The call dispatch server 103 stores the call that is requested to be held in the call hold queue corresponding to the dispatch terminal.

503. The call dispatch server 103 returns to the call control server 102 a call hold result carrying the ID of the call that is requested to be held.

504. The call control server 102 selects a queuing device for holding the call.

505. The call control server 102 sends a call divert instruction to the call reception device 101 to instruct the call reception device 101 to divert the call that is requested to be held, to the selected queuing device 105 for holding.

506. The call reception device 101 diverts the call that is requested to be held, to the queuing device for holding and then returns a call queuing event response message to the call control server 102.

507. The call control server 102 returns a call hold success response message to the dispatch terminal 104, and the dispatch terminal 104 can process the currently accessed emergent call upon reception of the hold success response message.

In the flow illustrated in Figure 5, the call currently processed by the dispatch terminal is stored in the call hold queue corresponding to the dispatch terminal, that is, the currently processed call is suspended temporarily and diverted to the queuing device for holding, and thereafter the dispatcher can select the call from the call hold queue and continue with processing the call at any moment. Therefore, this approach of temporary suspension of processing totally different from releasing the call in the conventional technology can enable the dispatcher to control a sequence of processing different calls flexibly, thereby improve dispatch flexibility, reasonability and utility of the call dispatch system.

In the embodiments of the present invention, the dispatch terminal 104 can call the user through the call reception device 101 which will in turn connect the call. During communication, the dispatcher can hold its call initiated to the user in the corresponding call hold queue through the dispatch terminal 104. A specific holding method is the same as that in which the dispatch terminal holds a currently processed call in the call hold queue corresponding to the dispatch terminal, that is, the corresponding flow illustrated in Figure 4.

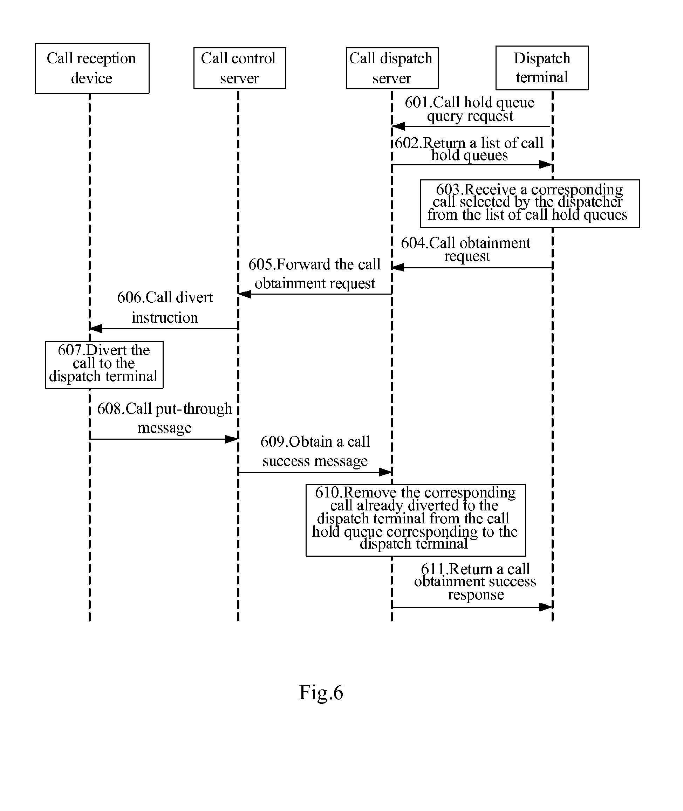

One or more calls waiting for processing may be stored in the call hold queue corresponding to the dispatch terminal, and the dispatcher can selects a call from the one or more calls waiting for processing and process the call at any moment. As illustrated in Figure 6, it is an example flow chart of signaling interaction for selecting a call from a call hold queue and processing the call, which includes the following steps.

601. The dispatch terminal 104 sends a call hold queue query request to the call dispatch server 103.

602. The call dispatch server 103 returns information on a list of locally stored call hold queues corresponding to the dispatch terminal to the dispatch terminal 104, and the list information includes at least IDs of respective calls stored in the call hold queues.

603. The dispatch terminal 104 presents to the dispatcher the information on the calls stored in the call hold queues, which is returned from the call dispatch server 103, and receives a corresponding call to be processed, which is selected by the dispatcher from the list of call hold queues.

604. The dispatch terminal 104 sends to the call dispatch server 103 a call obtainment request carrying the ID of the corresponding call selected by the dispatcher.

605. The call dispatch server 103 forwards the call obtainment request to the call control server 102.

606. The call control server 102 sends a call divert instruction to the call reception device 101 to instruct diverting of the corresponding call selected by the user to the dispatch terminal 104.

607. The call reception device 101 diverts the corresponding call held in the queuing device to the dispatch terminal 104.

608. The call reception device 101 sends a call put-through message to the call control server 102 after diverting the corresponding call to the dispatch terminal 104 with success.

609. The call control server 102 returns a call obtainment success message to the call dispatch server 103.

610. The call dispatch server 103 removes the corresponding call already diverted to the dispatch terminal from the locally stored hold queue corresponding to the dispatch terminal.

611. The call dispatch server 103 returns a call obtainment success response to the dispatch terminal 104.

With the signaling flow illustrated in Figure 6, the dispatcher may select a call from the call hold queue and process the call at his own will, thereby enabling combination of automatic allocation and manual selection of the call to make the call dispatch more reasonable and to improve effectively a quality of the call dispatch.

After a call is allocated to the dispatch terminal, the dispatcher can alternatively refuse the call; and after obtaining the dispatch approach of refusing processing of the newly accessed call as selected by the user, the dispatch terminal 104 returns a call refusal message to the call dispatch server 103, and the call dispatch server 103 relocates the call to another dispatch terminal in the call dispatch system.

The technical solutions according to the embodiments of the present invention allocate a received call to one or more dispatch terminals and then process the received call by interacting with the dispatch terminal in reception of the allocated call. For example, a call processing request returned from the dispatch terminal is received, and the call is further processed in response to the call processing request, for example, possibly by storing the call in a call hold queue corresponding to the dispatch terminal and then further processing the call or by reallocating the call to another dispatch terminal. Thus, the received call can be held and can be selected from the call hold queue and processed at any moment dependent upon a processing progress, a load among the dispatch terminals can be balanced to improve flexibility and initiative of dispatching the call, and the control process can be easy to implement. Furthermore in the call dispatch system and method according to the embodiments of the present invention, each dispatch terminal can process a plurality of calls (for example, more than eight calls are stored in the call hold queue corresponding to the dispatch terminal), and an emergent call can be processed preferentially. A dispatch terminal user can store a call in the call hold queue for a wait or select a call waiting for processing from the call hold queue and decide a priority of the call at his own will, thereby enabling better execution of a dispatch task.

The above embodiments are intended to illustrate and explain the disclosure. It can be appreciated that the embodiments of the present invention will not be limited thereto. Various modifications and variations may be made by those skilled in the art without departing from the scope of the embodiments.

## Claims

1. A call dispatch method, **characterized by** comprising:
allocating a received call to a dispatch terminal;
receiving a call processing request returned from the dispatch terminal; and
executing, in response to the call processing request, processing of storing the received call in a call hold queue corresponding to the dispatch terminal, or of holding a call currently processed by the dispatch terminal in the call hold queue corresponding to the dispatch terminal and processing the received call, or of allocating the received call to another dispatch terminal.

2. The method according to claim 1, wherein:
the call processing request is a call hold request; and
the processing comprises storing the received call in the call hold queue corresponding to the dispatch terminal.

3. The method according to claim 1, wherein:
the call processing request is an immediate processing request; and
the processing comprises holding the call currently processed by the dispatch terminal to the call hold queue corresponding to the dispatch terminal, and processing the received call.

4. The method according to claim 1, wherein:
the call processing request is a processing refusal request; and
the processing comprises allocating the received call to another dispatch terminal.

5. The method according to claim 1, wherein the allocating of the received call to the dispatch terminal comprises:
querying about number of calls currently stored in the call hold queues corresponding to respective dispatch terminals, and sending a call access notification to one of the dispatch terminals with the least number of stored calls.

6. The method according to claim 1, further comprising:
receiving a call obtainment request, which is sent from the dispatch terminal, carrying an identifier corresponding to the call to be obtained; and
diverting the call corresponding to the identifier to the dispatch terminal.

7. The method according to claim 6, wherein the diverting of the call corresponding to the identifier to the dispatch terminal comprises:
forwarding the call obtainment request to a call control server;
sending, by the call control server, to a call reception device a call divert instruction adapted to indicate diverting of the call corresponding to the identifier to the dispatch terminal; and
diverting, by the call reception device, the call corresponding to the identifier, which is held in a queuing device, to the dispatch terminal.

8. The method according to claim 6, further comprising: removing the call corresponding to the identifier from the locally stored call hold queue corresponding to the dispatch terminal.

9. The method according to claim 6, further comprising:
receiving a call hold queue query request sent from the dispatch terminal; and
returning information on a list of locally stored call hold queues corresponding to the dispatch terminal to the dispatch terminal, the list information comprising at least identifiers corresponding to respective calls stored in the call hold queues.

10. A call dispatch system, **characterized by** comprising a call dispatch server (103) connected with one or more dispatch terminals (104), wherein:
the call dispatch server (103) is adapted to receive a call sent from a user, to allocate the call to the dispatch terminals (104), receive a call processing request sent from the dispatch terminal (104), and execute, in response to the call processing request, the processing of storing the received call in a call hold queue corresponding to the dispatch terminal (104), or of holding a call currently processed by the dispatch terminal (104) in the call hold queue corresponding to the dispatch terminal (104)and processing the received call, or of allocating the received call to another dispatch terminal (104); and
the dispatch terminal (104) is adapted to send the call processing request to the call dispatch server (103) in response to a call control instruction.

11. The call dispatch system according to claim 10, further comprising:
a call control server (102) adapted to instruct a call reception device to divert the call to a queuing device for holding.

12. The call dispatch system according to claim 11, wherein:
the call dispatch server (103) is further adapted to receive a call obtainment request, sent from the dispatch terminal (104) and carrying an identifier corresponding to a call to be obtained, and forward the call obtainment request to the call control server (102);
the call control server (102) is further adapted to send to a call reception device (101) a call divert instruction to indicate diverting of the call corresponding to the identifier to the dispatch terminal (104); and
the call reception device is adapted to divert the call corresponding to the identifier, held in the queuing device, to the dispatch terminal.

13. The system according to claim 12, wherein the call dispatch server (103) is further adapted to remove the call corresponding to the identifier from the locally stored call hold queue corresponding to the dispatch terminal (104).

14. The call dispatch system according to claim 12, wherein the call dispatch server (103) is further adapted to:
receive a call hold queue query request sent from the dispatch terminal (104), and return the information on a list of locally stored call hold queues corresponding to the dispatch terminal (104) to the dispatch terminal (104), wherein the list information comprises at least identifiers corresponding to respective calls stored in the call hold queues.

15. A call dispatch device, **characterized by** comprising:
a module adapted to receive a call initiated from a user and allocate the call to a dispatch terminal;
a module adapted to receive a call processing request sent from the dispatch terminal; and
a module adapted to execute, in response to the call processing request, the processing of storing the received call in a call hold queue corresponding to the dispatch terminal, or of holding a call currently processed by the dispatch terminal in the call hold queue corresponding to the dispatch terminal and processing the received call, or of allocating the received call to another dispatch terminal.

16. The device according to claim 15, further comprising:
a module adapted to instruct a call reception device through a call control server to divert the call to a queuing device for holding.

17. The device according to claim 15, further comprising:
a module adapted to receive a call obtainment request, which is sent from the dispatch terminal, carrying an identifier corresponding to a call to be obtained; and
a module adapted to divert the call corresponding to the identifier to the dispatch terminal.

18. The device according to claim 17, further comprising a module adapted to remove the call corresponding to the identifier from the locally stored call hold queue corresponding to the dispatch terminal.

19. The device according to claim 17, further comprising a module adapted to receive a call hold queue query request sent from the dispatch terminal, and return information on a list of locally stored call hold queues corresponding to the dispatch terminal to the dispatch terminal, wherein the list information comprises at least identifiers corresponding to respective calls stored in the call hold queues.

20. A call processing device, **characterized by** comprising:
a call control server, adapted to receive a call access message sent from a call reception device, initiate a call dispatch request to a call dispatch server, and control the call reception device to divert and hold a call in accordance with a dispatch result from the call dispatch server; and
a call dispatch server, adapted to receive the call dispatch request, allocate the call to a dispatch terminal, receive a dispatch instruction from the dispatch terminal, and store the call in a call hold queue corresponding to the dispatch terminal or to extract the held call from the call hold queue.

21. A dispatch terminal, **characterized by** comprising:
a call transmission/reception module, adapted to initiate a call to a user or receive a call initiated from the user;
a processing selection module, adapted to provide a dispatcher with options of approaches of processing the call and obtain a selection result from the dispatcher, notify a call hold module upon obtaining a call hold selection from the dispatcher, and notify a call execution module upon obtaining an immediate processing selection from the dispatcher;
a call hold module, adapted to store the call in a corresponding call hold queue, and hold the call;
a call execution module, adapted to put through the call to activate communication; and
a call selection module, adapted to select the held call from the corresponding call hold queue so that the call execution module processes the call.
